(19) Europäisches Patentamt
European Patent Office
Office européen des brevets

(11) **EP 4 209 537 B1**

(12) **EUROPEAN PATENT SPECIFICATION**

(45) Date of publication and mention
of the grant of the patent:
**11.06.2025  Bulletin 2025/24**

(21) Application number: **21864427.6**

(22) Date of filing: **03.09.2021**

(51) International Patent Classification (IPC):
*C08J 9/16* *(2006.01)*          *B29C 44/00* *(2006.01)*
*B29C 44/60* *(2006.01)*          *B29C 48/30* *(2019.01)*
*B29C 48/345* *(2019.01)*          *B29C 48/395* *(2019.01)*
*B29C 48/92* *(2019.01)*

(52) Cooperative Patent Classification (CPC):
**C08J 9/16; B29B 7/726; B29B 7/823; B29B 7/826;
B29B 9/12; B29C 44/3461; B29C 44/50;
B29C 48/05; B29C 48/345; B29C 48/37;
B29C 48/387; B29C 48/40; B29C 48/92;
C08J 9/122; C08J 9/232;**          (Cont.)

(86) International application number:
**PCT/JP2021/032427**

(87) International publication number:
**WO 2022/050375 (10.03.2022 Gazette 2022/10)**

(54) **EXTRUDED FOAM PARTICLES AND METHOD FOR PRODUCING SAME**

EXTRUDIERTE SCHAUMSTOFFTEILCHEN UND VERFAHREN ZUR HERSTELLUNG DAVON

PARTICULES DE MOUSSE EXTRUDÉE ET LEUR PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **04.09.2020  JP 2020149412**

(43) Date of publication of application:
**12.07.2023  Bulletin 2023/28**

(73) Proprietor: **Kaneka Corporation
Osaka-shi, Osaka 530-8288 (JP)**

(72) Inventors:
• **NAKAYAMA, Kiyotaka
Settsu-shi, Osaka 566-0072 (JP)**
• **AMANO, Masaki
Settsu-shi, Osaka 566-0072 (JP)**
• **SHIMODA, Mitsutaka
Settsu-shi, Osaka 566-0072 (JP)**

(74) Representative: **Vossius & Partner
Patentanwälte Rechtsanwälte mbB
Siebertstraße 3
81675 München (DE)**

(56) References cited:
CN-A- 109 228 003      CN-A- 111 171 366
CN-A- 111 171 366      CN-A- 111 253 677
CN-A- 111 253 677      JP-A- 2009 280 708
JP-A- 2010 121 020      JP-A- 2010 241 906
JP-A- 2019 090 027      JP-A- H05 508 116
JP-A- H07 196 840      JP-A- H09 507 868
JP-A- H10 119 037

(52) Cooperative Patent Classification (CPC): (Cont.)
B29B 7/48; B29B 7/7404; B29B 9/06; B29B 9/065;
B29C 44/3446; B29C 48/0012; B29C 48/0022;
B29C 48/04; B29C 48/255; B29C 48/82;
B29C 48/834; B29K 2023/12; C08J 2201/03;
C08J 2203/06; C08J 2205/052; C08J 2323/10

# EP 4 209 537 B1

## Description

### Technical Field

The present invention relates to extruded expanded particles and a method of producing the extruded expanded particles.

### Background Art

Polypropylene-based resin in-mold foamed molded products obtained with use of polypropylene-based resin expanded particles have the characteristics of, for example, being excellent in capability of being formed in any shape, shock-absorbing properties, lightweight properties, and heat insulating properties, which are advantages of in-mold foamed molded products.

As a technique for obtaining polypropylene-based resin expanded particles by an extrusion foaming method, a technique disclosed in Patent Literature 1 is known. Patent Literature 1 discloses a method of producing pre-expanded particles of a thermoplastic resin, the method being characterized by: using an extruder to melt a thermoplastic resin, mix a blowing agent with the thermoplastic resin, and then cool and extrude a resultant mixture; and cutting, to obtain pre-expanded particles, (i) during expansion, an extruded expanded material which is being expanded to have a diameter 1.5 to 10.5 times larger than the diameter of a nozzle of an extrusion die or (ii) an extruded expanded material which has been completely expanded and has been expanded to have a diameter 1.5 to 10.5 times larger than the diameter of the nozzle of the extrusion die.

As a device used to obtain polypropylene-based resin expanded particles by an extrusion foaming method, a device disclosed in Patent Literature 2 is known. Patent Literature 2 discloses an extrusion method for producing expanded pellets, the method including the steps of: extruding, through an extrusion die, a polymer melt into a cutting chamber having a fluid inlet, a pellet suspension outlet, and a cutter assembly that has a plurality of cutter blades; cutting the extruded melt to produce one or more pellets.

Documents CN 111 171 366, CN 109 228 003 and CN 111 253 677 disclose further methods of producing polypropylene-based resin expanded particles by extrusion.

### Citation List

[Patent Literature]

[Patent Literature 1]

Japanese Patent Application Publication Tokukaihei No. 7-011041

[Patent Literature 2]

PCT international application publication, No. WO2018/006040

### Summary of Invention

### Technical Problem

However, conventional techniques as described above are not sufficient from the viewpoint of inexpensively obtaining, by an extrusion foaming method, polypropylene-based resin expanded particles having excellent moldability.

An embodiment of the present invention has been made in view of the above problem, and the object thereof is to inexpensively provide polypropylene-based resin extruded expanded particles having excellent moldability.

### Solution to Problem

That is, a method of producing polypropylene-based resin extruded expanded particles in accordance with an embodiment of the present invention is a method of producing polypropylene-based resin extruded expanded particles, including the steps of: (a) melting and kneading, with use of an extruder including a die, a composition containing a blowing agent and a resin mixture that contains a polypropylene-based resin having a branched structure; (b) extruding, through the die, the composition into a region which is a liquid phase and which is at a lower pressure than the extruder; (c) cutting the composition in the region; and (d) obtaining polypropylene-based resin extruded expanded particles, the blowing agent being carbon dioxide, an amount of the blowing agent used being 0.5 parts by weight to 7.0 parts by weight with respect to 100.0 parts by weight of the resin mixture, a temperature A of the composition immediately after entering the die being a melting point of the resin mixture + 0°C to the melting point + 30°C, a temperature B of the liquid phase being 20°C to 90°C, a value T, calculated by the following expression (1), being 10 to 25: T = (the temperature A) - (the melting point) + (the amount of the blowing agent used) $\times$ 2.5 - {(the temperature A - the temperature B) $\times$ 0.08 }... expression (1).

Advantageous Effects of Invention

An embodiment of the present invention has the effect of making it possible to inexpensively provide polypropylene-based resin extruded expanded particles having excellent moldability.

Description of Embodiments

The following description will discuss embodiments of the present invention. The present invention is not, however, limited to these embodiments. The present invention is not limited to the features described below, but may be altered in various ways within the scope of the claims. The present invention also encompasses, in its technical scope, any embodiment or example derived by combining technical means disclosed in differing embodiments or examples. Furthermore, it is possible to form a new technical feature by combining technical means disclosed in differing embodiments. All academic and patent literatures cited herein are incorporated herein by reference. Any numerical range expressed as "A to B" herein means "not less than A and not more than B (i.e., a range from A to B which includes both A and B)" unless otherwise stated.

A copolymer containing, as structural units, a structural unit derived from an $X^1$ monomer, a structural unit derived from an $X^2$ monomer, ... , and an $X^n$ monomer (n is an integer of 2 or more) is also referred to as "$X^1/X^2/ ... /X^n$ copolymer", unless otherwise stated. Such a $X^1/X^2/ ... /X^n$ copolymer is not particularly limited as to the manner in which the structural units of the copolymer are arranged, unless otherwise stated, and may be a random copolymer, a block copolymer, or a graft copolymer.

[1. Technical idea of an embodiment of the present invention]

The inventors of the present invention decided to use only carbon dioxide as a blowing agent, in order to inexpensively produce polypropylene-based resin extruded expanded particles. In a case where only carbon dioxide is used as a blowing agent, there are the advantages that, since a production facility does not need to be made explosionproof, production costs are low and also an environmental load is low, as compared with a case where an organic blowing agent, such as butane or pentane, is used as a blowing agent.

In a case where an organic blowing agent is used as a blowing agent, it is relatively easy to control a producing step, and it is easy to obtain polypropylene-based resin extruded expanded particles having excellent moldability. However, in a case where polypropylene-based resin extruded expanded particles are produced under the conditions that (i) only carbon dioxide is used as a blowing agent and (ii) a conventional method is employed except for use of the carbon dioxide, obtained polypropylene-based resin extruded expanded particles have poor moldability. The reason for this fact is not clear, but is considered to be as follows.

Due to being an inorganic gas, carbon dioxide is unlikely to be compatible with a polypropylene-based resin. Therefore, in a case where carbon dioxide is used, it is impossible to use conventional knowledge (e.g., production conditions) about an effect of an organic blowing agent on the physical properties (e.g., plasticity, viscosity, etc.) of a molten resin. As a result, in a case where carbon dioxide is used, it is impossible to use conventional production conditions which are for obtaining, with use of an organic blowing agent, polypropylene-based resin extruded expanded particles having excellent moldability and to which only small changes are made.

Thus, in order to obtain polypropylene-based resin extruded expanded particles having excellent moldability even in a case where carbon dioxide is used, the inventors of the present invention studied various production conditions.

As a result, the inventors of the present invention uniquely obtained findings that, in order to obtain polypropylene-based resin extruded expanded particles having excellent moldability with use of carbon dioxide, it is important to adjust (i) the temperature of a molten resin immediately after entering a die and (ii) the amount of a blowing agent used.

Next, the inventors of the present invention decided to employ an underwater cut method (UWC method) among techniques for obtaining polypropylene-based resin expanded particles by an extrusion foaming method. The UWC method is a method of (i) extruding, into a liquid phase (for example, water) through a die, a composition obtained by melting and kneading with use of an extruder (also referred to as a molten resin) and (ii) cutting the composition with use of a cutting part (for example, a cutter or the like) which is provided immediately after the die and which is provided in the liquid phase. On the other hand, there is also a method of (i) extruding, into a gas phase such as air through a die, a composition obtained by melting and kneading with use of an extruder and (ii) cutting the composition with use of a cutting part which is provided immediately after the die and which is provided in the gas phase. In this specification, the "method of (i) extruding a molten resin into a gas phase such as air and (ii) cutting the molten resin" is also referred to as "gas phase cut method" for convenience.

As compared with a case where the gas phase cut method is carried out, in a case where the UWC method is carried out, it is not easy to adjust the temperature of a molten resin immediately after entering a die, and the importance of adjusting the temperature increases. This is because, as compared with a case where the gas phase cut method is carried out, in a case where the UWC method is carried out with use of a liquid phase that is set at a temperature lower than the temperature of a die, the temperature of a side of the die, which side is in contact with the liquid phase, can decrease since the thermal conductivity of the liquid phase is higher than that of a gas phase. As a result, as compared with a case where the gas phase cut method is carried out, in a case where the UWC method is carried out, a molten resin immediately after entering a die may be cooled and solidified while passing through the die, and thus the resin may clog the die.

Thus, in order to obtain polypropylene-based resin extruded expanded particles having excellent moldability even in a case where the UWC method is carried out with use of carbon dioxide, the inventors of the present invention further studied various production conditions.

As a result, the inventors of the present invention uniquely obtained the following novel findings and completed the present invention. The temperature of a molten resin immediately after entering a die, the amount of a blowing agent used, and the temperature of a liquid phase (e.g., water) are adjusted in accordance with the melting point of a resin mixture containing a polypropylene-based resin so that a value T calculated by the foregoing expression (1) becomes a specific value. This makes it possible to provide polypropylene-based resin extruded expanded particles having excellent moldability, even by the UWC method with use of carbon dioxide.

[2. Method of producing polypropylene-based resin extruded expanded particles]

A method of producing polypropylene-based resin extruded expanded particles in accordance with an embodiment of the present invention is a method of producing polypropylene-based resin extruded expanded particles, including the steps of: (a) melting and kneading, with use of an extruder including a die, a composition containing a blowing agent and a resin mixture that contains a polypropylene-based resin having a branched structure; (b) extruding, through the die, the composition into a region which is a liquid phase and which is at a lower pressure than the extruder; (c) cutting the composition in the region; and (d) obtaining polypropylene-based resin extruded expanded particles, the blowing agent being carbon dioxide, an amount of the blowing agent used being 0.5 parts by weight to 7.0 parts by weight with respect to 100.0 parts by weight of the resin mixture, a temperature A of the composition immediately after entering the die being a melting point of the resin mixture + 0°C to the melting point + 30°C, a temperature B of the liquid phase being 20°C to 90°C, a value T, calculated by the following expression (1), being 10 to 25:

$$T = \text{(the temperature A)} - \text{(the melting point)} + \text{(the amount of the blowing agent used)} \times 2.5 - \{\text{(the temperature A} - \text{the temperature B)} \times 0.08\} \qquad \text{expression (1).}$$

In this specification, the "polypropylene-based resin having a branched structure" may be referred to as "polypropylene-based resin". The "polypropylene-based resin extruded expanded particles" may be referred to as "extruded expanded particles". The "method of producing polypropylene-based resin extruded expanded particles" may be referred to as "production method". The "method of producing polypropylene-based resin extruded expanded particles in accordance with an embodiment of the present invention" may be referred to as "present production method".

The present production method has the above feature, and therefore has the advantage that it is possible to inexpensively provide polypropylene-based resin extruded expanded particles having excellent moldability.

In this specification, the moldability of polypropylene-based resin extruded expanded particles is evaluated by (a) the molding range of the polypropylene-based resin extruded expanded particles and (b) the compressive strength of a polypropylene-based resin in-mold foamed molded product obtained from the polypropylene-based resin extruded expanded particles.

The polypropylene-based resin extruded expanded particles obtained by the present production method can be formed into a polypropylene-based resin in-mold foamed molded product by in-mold foam molding of the polypropylene-based resin extruded expanded particles. In this specification, the "polypropylene-based resin in-mold foamed molded product" may be referred to as "foamed molded product".

First, each step of the present production method will be described after raw materials used in the present production method are described.

(2-1. Resin mixture)

In the present production method, the resin mixture can be said to be components other than the blowing agent in the composition.

(2-1-1. Polypropylene-based resin having branched structure)

In this specification, the "polypropylene-based resin having a branched structure" is intended to mean a polypropylene-based resin in which linear polypropylene-based resins are partially intermolecularly crosslinked with each other and a polypropylene-based resin in which, as a branched chain, a diene compound or the like other than polypropylene is introduced in a linear polypropylene-based resin. In this specification, the "polypropylene-based resin having a branched structure" may be simply referred to as "polypropylene-based resin".

In this specification, polypropylene-based resin is intended to mean a resin which contains structural units derived from a propylene monomer in a proportion of not less than 50 mol% with respect to 100 mol% of all structural units contained in the resin. In this specification, the "structural units derived from a propylene monomer" may be referred to as "propylene units".

The polypropylene-based resin may be a block copolymer, a random copolymer, or a graft copolymer. The polypropylene-based resin may be constituted merely by propylene units, except for a structural unit forming the branched structure.

In addition to the propylene units, the polypropylene-based resin may have one or more units of structural units derived from a monomer(s) other than a propylene monomer or may have one or more types of structural units derived from monomers other than a propylene monomer. Examples of such monomer(s) other than a propylene monomer include: (a) $\alpha$-olefin having 2 or 4 to 12 carbon atoms, such as ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and 1-decene; (b) cyclic olefin such as cyclopentene, norbornene, and tetracyclo[6,2,11,8,13,6]-4-dodecene; (c) diene such as 5-methylene-2-norbornene, 5-ethylidene-2-norbornene, 1,4-hexadiene, methyl-1,4-hexadiene, and 7-methyl-1,6-octadiene; and (d) vinyl-based monomers such as vinyl chloride, vinylidene chloride, acrylonitrile, methacrylonitrile, vinyl acetate, acrylic acid, acrylic esters, methacrylic acid, methacrylic esters, maleic acid, maleic anhydride, styrene-based monomers, vinyltoluene, and divinylbenzene.

Examples of the acrylic esters include methyl acrylate, ethyl acrylate, butyl acrylate, hexyl acrylate, 2-ethylhexyl acrylate, lauryl acrylate, stearyl acrylate, 2-hydroxyethyl acrylate, 2-hydroxypropyl acrylate, and glycidyl acrylate.

Examples of the methacrylic esters include methyl methacrylate, ethyl methacrylate, butyl methacrylate, hexyl methacrylate, 2-ethylhexyl methacrylate, lauryl methacrylate, stearyl methacrylate, 2-hydroxyethyl methacrylate, 2-hydroxypropyl methacrylate, and glycidyl methacrylate.

Examples of the styrene-based monomers include styrene, methylstyrene, dimethylstyrene, alpha methylstyrene, paramethylstyrene, ethylstyrene, diethylstyrene, isopropylstyrene, t-butylstyrene, bromostyrene, dibromostyrene, tribromostyrene, chlorostyrene, dichlorostyrene, and trichlorostyrene.

In addition to the propylene units, the polypropylene-based resin has, as the structural unit(s) derived from a monomer(s) other than a propylene monomer, preferably a structural unit(s) derived from $\alpha$-olefin having 2 or 4 to 12 carbon atoms, more preferably a structural unit(s) derived from ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and/or 1-decene, more preferably a structural unit(s) derived from ethylene, 1-butene, isobutene, 1-pentene, 3-methyl-1-butene, 1-hexene, and/or 4-methyl-1-pentene, even more preferably a structural unit(s) derived from ethylene, 1-butene, isobutene, and/or 1-pentene, and particularly preferably a structural unit(s) derived from ethylene and/or 1-butene.

The polypropylene-based resin contains the structural units derived from a propylene monomer in a proportion of preferably not less than 90 mol%, more preferably not less than 93 mol%, even more preferably not less than 95 mol%, and particularly preferably not less than 97 mol%, with respect to 100 mol% of all structural units contained in the polypropylene-based resin. According to this feature, there is the advantage that a foamed molded product obtained from the extruded expanded particles tends to have high compressive strength.

The melting point of the polypropylene-based resin is not particularly limited. The melting point of the polypropylene-based resin is, for example, preferably 130°C to 165°C, more preferably 135°C to 164°C, even more preferably 138°C to 163°C, and particularly preferably 140°C to 162°C. In a case where the melting point of the polypropylene-based resin is not less than 130°C, there is the advantage that a foamed molded product tends to have high compressive strength. In a case where the melting point of the polypropylene-based resin is not more than 165°C, there are the advantages that it is possible to mold the extruded expanded particles at a relatively low steam pressure and therefore possible to mold the extruded expanded particles with use of a general-purpose molding machine for polypropylene-based resin expanded particles.

In this specification, the melting point of the polypropylene-based resin is indicated by a value measured by a differential scanning calorimetry (hereinafter referred to as "DSC method"). A specific operational procedure is as follows: (1) the temperature of 5 mg to 6 mg of the polypropylene-based resin is increased from 40°C to 220°C at a temperature increase rate of 10°C/minute so that the polypropylene-based resin is melted; (2) thereafter, the temperature of the melted polypropylene-based resin is decreased from 220°C to 40°C at a temperature decrease rate of 10°C/min so that the polypropylene-based resin is crystallized; and (3) then, the temperature of the crystallized polypropylene-based resin is increased from 40°C to 220°C at a temperature increase rate of 10°C/min. It is possible to determine, as the melting point of the polypropylene-based resin, a temperature at a peak (melting peak) in a DSC curve of the polypropylene-based resin which DSC curve is obtained in the second temperature increase (i.e., in (3)). As a differential scanning calorimeter, a differential scanning calorimeter of a DSC6200 type available from Seiko Instruments Inc. can be, for example, used.

The melt flow rate (MFR) of the polypropylene-based resin is not particularly limited. The MFR of the polypropylene-based resin is, for example, preferably 0.5 g/10 minutes to 20.0 g/10 minutes, more preferably 1.0 g/10 minutes to 15.0 g, even more preferably 2.0 g/10 minutes to 12.0 g/10 minutes, and particularly preferably 2.0 g/10 minutes to 10.0 g/10 minutes. In a case where the MFR of the polypropylene-based resin is not less than 0.5 g/10 minutes, there is the advantage that a foamed molded product tends to have a good surface property (beautiful surface). In a case where the MFR of the polypropylene-based resin is not more than 20.0 g/10 minutes, there is the advantage that the composition has good expandability in extrusion expansion.

In this specification, the MFR of the polypropylene-based resin is indicated by a value measured with use of an MFR measuring apparatus described in JIS K7210 under the following conditions: the diameter $\varphi$ of an orifice is 2.0959 $\pm$0.0050 mm; the length of the orifice is 8.000$\pm$0.025 mm; a load is 2160 g; and a temperature is 230$\pm$0.2°C.

The polypropylene-based resin having a branched structure can be obtained by introducing a branched structure into a polypropylene-based resin in which a branched structure is not introduced. Examples of a method of introducing a branched structure into a polypropylene-based resin in which a branched structure is not introduced include, but are not particularly limited to, (a) a method of irradiating, with radial rays, a polypropylene-based resin in which a branched structure is not introduced and (b) a method of melting and kneading a polypropylene-based resin in which a branched structure is not introduced, a conjugated diene compound, and a radical polymerization initiator.

The method of obtaining the polypropylene-based resin having a branched structure by the method of irradiating, with radial rays, a polypropylene-based resin in which a branched structure is not introduced is specifically a method disclosed in, for example, Published Japanese Translation of PCT International Application Tokuhyo No. 2002-542360.

The method of melting and kneading a polypropylene-based resin in which a branched structure is not introduced, a conjugated diene compound, and a radical polymerization initiator (hereinafter, also referred to as "method A") will be further described. In the method A, it is possible to obtain the polypropylene-based resin having a branched structure, for example, by sequentially carrying out the following (i) through (iv): (i) a polypropylene-based resin in which a branched structure is not introduced, a conjugated diene compound, and a radical polymerization initiator are melted and kneaded with use of an extruder including a die; (ii) the melted and kneaded material thus obtained is extruded through the die; (iii) the melted and kneaded material thus extruded (also referred to as a strand) is cooled; and (iv) simultaneously with and/or after cooling of the strand, the strand is cut. The method of obtaining the polypropylene-based resin having a branched structure by the method A is specifically a method disclosed in, for example, WO2020/004429.

In an embodiment of the present invention, the polypropylene-based resin is preferably a polypropylene-based resin which has a branched structure and which is obtained by the above-described method A, for the following reasons (i) and/or (ii): (i) it is possible to stably introduce a branched structure into a polypropylene-based resin in which a branched structure is not introduced, and reproducibility of introduction of a branched structure is high; and (ii) it is possible to obtain the polypropylene-based resin having a branched structure with high productivity and without the need for a complicated facility.

In other words, in an embodiment of the present invention, the polypropylene-based resin having a branched structure is preferably obtained by the method of melting and kneading a polypropylene-based resin in which a branched structure is not introduced, a conjugated diene compound, and a radical polymerization initiator.

The melt tension of the polypropylene-based resin having a branched structure is not particularly limited. The melt tension of the polypropylene-based resin having a branched structure is, for example, preferably 3 cN to 20 cN, more preferably 3 cN to 15 cN, and particularly preferably 3 cN to 10 cN. According to this feature, there is the advantage that the polypropylene-based resin extruded expanded particles having a low open cell ratio are obtained.

In this specification, the melt tension of the polypropylene-based resin having a branched structure is measured with use of a Capilograph 1D (available from TOYO SEIKI SEISAKU-SHO, LTD, Japan). Specifically, the melt tension is measured by the following (1) through (5): (1) a barrel which has a diameter of 9.55 mm and which has been heated to a test temperature (200°C) is filled with a sample resin (polypropylene-based resin having a branched structure) for measurement; (2) next, the sample resin is heated for 10 minutes in the barrel which has been heated to the test temperature (200°C); (3) subsequently, while the sample resin is taken out in a strand shape from a capillary die (diameter: 1.0 mm, length: 10 mm) at a piston falling speed kept constant (10 mm/minute), this strand-like sample resin is caused to pass through a pulley which is for detecting a tension and which is located 350 mm below the capillary die, and then wind-up of the strand-like sample resin is started with use of a wind-up roll; (4) after take-off of the strand-like sample resin become stable, the wind-up speed of the strand-like sample resin is increased from an initial speed of 1.0 m/minute to a speed of 200 m/minute at a constant rate in 4 minutes; and (5) a load acting on the pulley, which is equipped with a load cell, at a time when the strand-like sample resin fractures is measured as the melt tension.

The melt flow rate (MFR) at 230°C of the polypropylene-based resin having a branched structure is not particularly limited. The MFR at 230°C of the polypropylene-based resin having a branched structure is, for example, preferably 0.5 g/10 minutes to 20.0 g/10 minutes, more preferably 1.0 g/ 10 minutes to 15.0 g, even more preferably 2.0 g/ 10 minutes to 12.0 g/10 minutes, and particularly preferably 2.0 g/10 minutes to 10.0 g/10 minutes. In a case where the MFR of the polypropylene-based resin having a branched structure is not less than 0.5 g/10 minutes, there is the advantage that a foamed molded product tends to have a good surface property (beautiful surface). In a case where the MFR of the polypropylene-based resin having a branched structure is not more than 20.0 g/ 10 minutes, there is the advantage that the composition has good expandability in extrusion expansion. In this specification, the MFR of the polypropylene-based resin having a branched structure is indicated by a value measured with use of an MFR measuring apparatus described in JIS K7210 under the following conditions: the diameter $\varphi$ of an orifice is $2.0959 \pm 0.0050$ mm; the length of the orifice is $8.000 \pm 0.025$ mm; a load is 2160 g; and a temperature is $230 \pm 0.2°C$.

The amount of the polypropylene-based resin having a branched structure used, i.e., the amount of the polypropylene-based resin which has a branched structure and which is contained in the resin mixture is not particularly limited. The amount of the polypropylene-based resin having a branched structure is, for example, preferably 20 parts by weight to 100 parts by weight, more preferably 40 parts by weight to 100 parts by weight, even more preferably 50 parts by weight to 100 parts by weight, and particularly preferably 60 parts by weight to 100 parts by weight, with respect to 100 parts by weight of the resin mixture.

(2-1-2. Another resin or rubber)

The resin mixture may further contain a rubber or a resin which is different from the polypropylene-based resin (hereinafter also referred to as "another resin"), provided that the effect of an embodiment of the present invention is not prevented from being brought about. Examples of the another resin, which is different from the polypropylene-based resin, include: (a) polypropylene-based resins in each of which a branched structure is not introduced (such as an ethylene/propylene random copolymer, an ethylene/propylene block copolymer, and a propylene homopolymer); (b) ethylene-based resins such as highdensity polyethylene, medium-density polyethylene, low-density polyethylene, linear low-density polyethylene, linear very-low-density polyethylene, an ethylene/vinyl acetate copolymer, an ethylene/acrylic acid copolymer, and an ethylene/methacrylic acid copolymer; and (c) styrene-based resins such as polystyrene, a styrene/-maleic anhydride copolymer, and a styrene/ethylene copolymer. Examples of the rubber include olefin-based rubbers such as ethylene /propylene rubber, ethylene /butene rubber, ethylene/hexene rubber, and ethylene/octene rubber.

The amount of the another resin or the rubber used, i.e., the amount of the another resin or the rubber contained in the resin mixture is not particularly limited. The amount of the another resin or the rubber is, for example, preferably 0.01 parts by weight to 20.00 parts by weight, more preferably 0.05 parts by weight to 15.00 parts by weight, even more preferably 0.10 parts by weight to 10.00 parts by weight, and particularly preferably 0.10 parts by weight to 5.00 parts by weight, with respect to 100 parts by weight of the resin mixture.

(2-1-3. Cell nucleating agent)

The resin mixture may contain a cell nucleating agent for the purpose of controlling the number and shape of cells in the polypropylene-based resin extruded expanded particles to be obtained. Examples of the cell nucleating agent include a sodium bicarbonate-citric acid mixture, monosodium citrate, talc, and calcium carbonate. As the cell nucleating agent, one type of cell nucleating agent may be used solely or two or more types of cell nucleating agents may be used in combination.

The amount of the cell nucleating agent used, i.e., the amount of the cell nucleating agent contained in the resin mixture is not particularly limited. The amount of the cell nucleating agent is, for example, preferably 0.01 parts by weight to 5.00 parts by weight, more preferably 0.01 parts by weight to 3.50 parts by weight, even more preferably 0.01 parts by weight to 1.00 parts by weight, and particularly preferably 0.01 parts by weight to 0.50 parts by weight, with respect to 100 parts by weight of the polypropylene-based resin.

(2-1-4. Coloring agent)

The resin mixture may or may not contain a coloring agent. In a case where the resin mixture does not contain a coloring agent, it is possible to obtain the extruded expanded particles having a natural color (e.g., a color derived from the resin mixture). In a case where the resin mixture contains the coloring agent, it is possible to obtain the extruded expanded particles having a desired color (i.e., a color derived from the coloring agent). Examples of the coloring agent include perylene-based organic pigments, azobased organic pigments, quinacridone-based organic pigments, phthalocyanine-based organic pigments, threnebased organic pigments, dioxazine-based organic pigments, isoindoline-based organic pigments, and carbon black. As the coloring agent, one type of coloring agent may be used solely or two or more types of coloring agents may be used in combination. The amount of the coloring agent used, i.e., the amount of the coloring agent contained in the resin mixture is not particularly limited.

The amount of the coloring agent used, i.e., the amount of the coloring agent contained in the resin mixture is not particularly limited. The amount of the coloring agent is, for example, preferably 0.01 parts by weight to 20.00 parts by weight, more preferably 0.05 parts by weight to 15.00 parts by weight, even more preferably 0.10 parts by weight to 10.00 parts by weight, and particularly preferably 0.10 parts by weight to 5.00 parts by weight, with respect to 100 parts by weight of the resin mixture.

(2-1-5. Other components)

As necessary, the resin mixture may further contain, as another component or other components, (a) a stabilizer(s) such as an antioxidant, a metal deactivator, a phosphorous processing stabilizer, an ultraviolet absorber, an ultraviolet stabilizer, a fluorescent brightening agent, metallic soap, and/or an antacid adsorbent and/or (b) an additive(s) such as a crosslinking agent, a chain transfer agent, a lubricant, a plasticizer, a filler, a reinforcer, a flame retardant, and/or an antistatic agent. As the another component or the other components, one type of component may be used solely or two or more types of components may be used in combination.

(2-1-6. Melting point of resin mixture)

The melting point of the resin mixture is not particularly limited. In this specification, the melting point of the resin mixture can be determined by the same method as the above-described method of measuring the melting point of the polypropylene-based resin, except for changing the polypropylene-based resin to the resin mixture. Note that, in this specification, the resin composition of the resin mixture and the resin composition of the polypropylene-based resin extruded expanded particles to be obtained are the same. Therefore, the melting point of the polypropylene-based resin extruded expanded particles can be regarded as the melting point of the resin mixture. The melting point of the polypropylene-based resin extruded expanded particles can be determined by the same method as the above-described method of measuring the melting point of the polypropylene-based resin, except for changing the polypropylene-based resin to the polypropylene-based resin extruded expanded particles.

The melting point of the resin mixture is not particularly limited, and is, for example, preferably 130°C to 165°C, more preferably 135°C to 164°C, even more preferably 138°C to 163°C, and particularly preferably 140°C to 162°C. In a case where the melting point of the resin mixture is not less than 130°C, there is the advantage that a foamed molded product tends to have high compressive strength. In a case where the melting point of the resin mixture is not more than 165°C, there are the advantages that it is possible to mold the extruded expanded particles at a relatively low steam pressure and therefore possible to mold the extruded expanded particles with use of a general-purpose molding machine for polypropylene-based resin expanded particles.

(2-2. Composition)

In the present production method, a material obtained by adding the blowing agent to the above-described resin mixture is referred to as "composition".

(2-2-1. Blowing agent)

In the present production method, carbon dioxide is used as the blowing agent. Thus, the present production method has the advantages that production costs are low and also an environmental load is low, as compared with a case where an organic blowing agent is used.

In the present production method, a substance which is different from carbon dioxide and which can function as a blowing agent may be used in combination with the carbon dioxide, provided that the effect of an embodiment of the present invention is not prevented from being brought about.

The composition preferably substantially does not contain the substance which is different from carbon dioxide and which can function as a blowing agent. Specifically, the amount of the substance which is different from carbon dioxide, which can function as a blowing agent, and which is contained in the composition is preferably not more than 0.01 parts by weight, more preferably not more than 0.001 parts by weight, even more preferably not more than 0.0001 parts by weight, and particularly preferably 0 part by weight, with respect to 100 parts by weight of the composition.

Examples of the substance which is different from carbon dioxide and which can function as a blowing agent include (a) aliphatic hydrocarbons such as propane, normal butane, isobutane, normal pentane, isopentane, and hexane, (b) alicyclic hydrogens such as cyclopentane and cyclobutane, (c) inorganic gases such as air and nitrogen, and (d) water.

The amount of the blowing agent used is 0.5 parts by weight to 7.0 parts by weight, preferably 0.5 parts by weight to 6.0 parts by weight, more preferably 0.5 parts by weight to 5.0 parts by weight, even more preferably 0.5 parts by weight to 4.0 parts by weight, and particularly preferably 0.5 parts by weight to 3.5 parts by weight, with respect to 100.0 parts by weight of the resin mixture. The "amount of the blowing agent used" can be also referred to as "amount of the carbon dioxide used" and can be also referred to as "amount of the blowing agent (carbon dioxide) contained in the composition".

(2-3. Melting and kneading step)

The melting and kneading step can be also referred to as a step of obtaining a melted and kneaded composition which is obtained by melting and kneading the composition containing the blowing agent and the resin mixture that contains the polypropylene-based resin having a branched structure. In the melting and kneading step, it is only necessary that the composition containing the blowing agent and the resin mixture that contains the polypropylene-based resin having a branched structure be ultimately melted and kneaded. Specific examples of the melting and kneading step include the following methods (a) through (c):

(a) a method of mixing or blending the polypropylene-based resin having a branched structure, the blowing agent, and, as necessary, the another resin, the cell nucleating agent, the coloring agent, and/or the another component or the other components to prepare the composition and then melting and kneading the composition;
(b) a method of mixing or blending the polypropylene-based resin having a branched structure and the blowing agent, melting and kneading the composition thus obtained, adding to the composition the another resin, the cell nucleating agent, the coloring agent, and/or the another component or the other components as necessary, and then further melting and kneading the composition thus obtained; and
(c) a method of (c-1) mixing or blending the polypropylene-based resin having a branched structure and, as necessary, the another resin, the cell nucleating agent, the coloring agent, and/or the another component or the other components to prepare the resin mixture and then melting and kneading this resin crude mixture; and (c-2) adding the blowing agent to the resin mixture thus obtained to prepare the composition and then further melting and kneading the composition.

In any of the above-described methods (a) through (c), a method and order of adding the another resin, the cell nucleating agent, the coloring agent, and the another component or the other components, which are used as necessary, are not particularly limited. The another resin, the cell nucleating agent, the coloring agent, and the another component or the other components, which are used as necessary, may be added simultaneously or may be added separately and in random order.

The melting and kneading step may further include a step of, for example, after melting and kneading the composition by any of the above-described methods (a) through (c), decreasing the temperature of the melted and kneaded composition within a temperature range in which the melted and kneaded composition does not solidify.

The extruder used in the melting and kneading step is not particularly limited, provided that the extruder includes the die provided at an end thereof. The extruder includes, for example, (i) a kneading device for melting and kneading the composition containing the resin mixture and the blowing agent and (ii) the die provided at the end thereof. The extruder may further include a cooling device so as to decrease the temperature of the composition melted and kneaded by the kneading device.

The kneading device is, for example, preferably a twin screw extruder because the twin screw extruder has good mixing properties. The kneading device also preferably has a screw configuration because the screw configuration causes the blowing agent, injected into the kneading device, not to flow back to the upstream of the kneading device. That is, the kneading device is more preferably a twin screw extruder, which has a screw configuration. In the step of decreasing the temperature of the melted and kneaded composition, a cooling device(s) such as a single screw extruder and/or a melt cooler, which are/is provided after the kneading device, can be used to decrease the temperature of the composition. A gear pump may be provided between the kneading device (for example, twin screw extruder) and the cooling device(s) so as to increase the stability of discharge of the composition. A diverter valve may be provided between the cooling device and the die.

(2-4. Extruding step)

The extruding step includes steps of: causing the melted and kneaded composition to enter the die; and extruding, through the die, the composition into the region which is a liquid phase and which is at a lower pressure than the extruder.

In the present production method, the temperature A of the composition immediately after entering the die is adjusted so as to fall within a range of the melting point of the resin mixture + 0°C to the melting point + 30°C. The temperature A is preferably the melting point of the resin mixture + 1°C to the melting point + 25°C, more preferably the melting point of the resin mixture + 2°C to the melting point + 23°C, more preferably the melting point of the resin mixture + 3°C to the melting point + 20°C, and even more preferably the melting point of the resin mixture + 5°C to the melting point + 15°C. According to this feature, there are the advantages that the molding range (described later) of the extruded expanded particles tends to be broad and a foamed molded product to be obtained tends to have high compressive strength.

The temperature A of the composition immediately after entering the die can be adjusted so as to fall within the range of the melting point of the resin mixture + 0°C to the melting point + 30°C, by a method of adjusting various conditions that can affect the temperature A. The various conditions that can affect the temperature A include (a) the temperature of the melted and kneaded composition immediately after exiting the kneading device, (b) the temperature and the heat transfer area of a single screw extruder or a melt cooler, each of which is a cooling part, and a time for which the composition stays in the single screw extruder or the melt cooler, (c) the temperature of the diverter valve, (d) a temperature set on the die provided at the end of the extruder, the length of the die in an extrusion direction (the length may be also referred to as the thickness of the die), the area of contact between the die and the liquid phase, and (e) the temperature of the liquid phase (described later).

The temperature A can be measured by (a) a thermometer which is set so as to project into a hole in the die and which is set near an inlet of the die or (b) a thermometer which is set, for example, near an outlet of a diverter valve so that the composition comes into contact with the thermometer immediately before the composition enters the die. The temperature of the composition may vary while passing through the die. The thermometer for measuring the temperature A is preferably, for example, a thermometer which is set within 20 mm upstream or downstream from the inlet of the die along the extrusion direction.

The liquid phase is not particularly limited, but is preferably water because water can be inexpensively and safely produced.

The temperature B of the liquid phase is 20°C to 90°C, preferably 25°C to 85°C, more preferably 30°C to 80°C, even more preferably 35°C to 80°C, and particularly preferably 40°C to 80°C. According to this feature, there are the advantages that it is possible to stably control the temperature A of the composition immediately after entering the die and the extruded expanded particles in which a smaller number of extruded expanded particles adhere to each other are easily obtained. In this specification, the temperature B of the liquid phase can be measured by a thermometer which is set so as to be in contact with the liquid phase.

In the region, the pressure of the liquid phase with respect to the composition is preferably 0.05 MPa·G to 0.60 MPa·G, more preferably 0.07 MPa·G to 0.55 MPa·G, more preferably 0.10 MPa·G to 0.50 MPa·G, even more preferably 0.10 MPa·G to 0.45 MPa·G, and particularly preferably 0.10 MPa·G to 0.40 MPa-G. According to this feature, there are the advantages that the open cell ratio of the extruded expanded particles to be obtained is easily kept low and the extruded expanded particles to be obtained are easily prevented from adhering to each other. In this specification, "MPa·G" is intended to indicate a gage pressure.

(2-5. Cutting step)

The composition extruded through the die into the region which is the liquid phase and which is at a lower pressure than the extruder starts to expand immediately. In the cutting step, the composition which is expanding may be cut, or the composition which has finished expanding may be cut. In a case where the composition which is expanding is cut, the cut composition can complete expanding in the region. It can also be said that the cutting step is a step of cutting the composition in particulate form to prepare the polypropylene-based resin extruded expanded particles.

A method of cutting the composition extruded through the die is not particularly limited. For example, the composition may be cut with use of a cutter or the like which is provided next to the die along the extruding direction. The number of blades of the cutter, the rotational speed of the cutter, and the like are also not particularly limited.

(2-6. Step of obtaining polypropylene-based resin extruded expanded particles)

It can be also said that the step of obtaining the polypropylene-based resin extruded expanded particles is a step of collecting the polypropylene-based resin extruded expanded particles prepared (cut) in the cutting step.

A method of collecting the polypropylene-based resin extruded expanded particles is not particularly limited. For example, the polypropylene-based resin extruded expanded particles are collected by centrifugal dehydration.

(2-10. T)

In the present production method, the value T calculated by expression (1) is 10 to 25, preferably 10 to 20, more preferably 10 to 19, more preferably 10 to 18, even more preferably 10 to 17, and particularly preferably 11 to 16. According to this feature, there is the advantage that it is possible to obtain the polypropylene-based resin extruded expanded particles having excellent moldability.

(3. Polypropylene-based resin extruded expanded particles)

Polypropylene-based resin extruded expanded particles obtained by the present production method, i.e., polypropylene-based resin extruded expanded particles in accordance with an embodiment of the present invention will be described. In this specification, the "polypropylene-based resin extruded expanded particles in accordance with an embodiment of the present invention" may also be referred to as "the present polypropylene-based resin extruded expanded particles".

The present polypropylene-based resin extruded expanded particles are produced by the present production method having the above-described feature. Therefore, the present polypropylene-based resin extruded expanded particles have the advantage of having excellent moldability.

(3-1. Crystallization peak)

Polypropylene-based resin extruded expanded particles obtained by the extrusion foaming method have the characteristic that a single crystallization peak is present in a DSC curve X obtained by DSC. In other words, it is highly probable that polypropylene-based resin expanded particles having the characteristic that a single crystallization peak is present in a DSC curve X obtained by DSC are those obtained by the extrusion foaming method. The present polypropylene-based resin extruded expanded particles also have the characteristic that a single crystallization peak is present in a DSC curve X obtained by DSC.

In this specification, the DSC curve X of the polypropylene-based resin extruded expanded particles is a curve which is obtained by DSC and which is obtained after 5 mg to 6 mg of the polypropylene-based resin extruded expanded particles are heated from 40°C to 220°C at a rate of 10°C/minute. In other words, the DSC curve X of the polypropylene-based resin extruded expanded particles is a DSC curve obtained after the first temperature increase.

(3-2. Bulk density)

The bulk density of the present polypropylene-based resin extruded expanded particles is preferably 40 g/L to 300 g/L, more preferably 50 g/L to 250 g/L, even more preferably 60 g/L to 200 g/L, and particularly preferably 70 g/L to 150 g/L. According to this feature, there is the advantage that a polypropylene-based resin in-mold foamed molded product obtained with use of the polypropylene-based resin extruded expanded particles more exhibits characteristics such as the capability of being formed in any shape, shock-absorbing properties, lightweight properties, and heat insulating properties. In a case where the expansion ratio of the polypropylene-based resin extruded expanded particles does not reach the above range, a method of increasing the expansion ratio by (i) pressurizing the insides of the polypropylene-based resin extruded expanded particles with use of an inert gas and then (ii) heating the polypropylene-based resin extruded expanded particles (for example, a method disclosed in Japanese Patent Application Publication, Tokukaihei, No. 10-237212) can be also employed.

In this specification, the bulk density of the polypropylene-based resin extruded expanded particles is calculated by sequentially carrying out the following (1) through (3): (1) the polypropylene-based resin extruded expanded particles are put in a container, such as a graduated cylinder, a beaker, or a pail, the volume V ($cm^3$) of which is known, until the container overflows with the polypropylene-based resin extruded expanded particles; (2) a powder surface (upper end) of the container is made level, and the weight W (g) of the polypropylene-based resin extruded expanded particles in the container is measured; and (3) the bulk density of the polypropylene-based resin extruded expanded particles is calculated by the following expression: The bulk density (g/L) = the weight W (g) of the expanded particles/{the volume V ($cm^3$) of the container/1000}.

(3-3. Open cell ratio)

It is more preferable that the open cell ratio of the present polypropylene-based resin extruded expanded particles be lower. The open cell ratio of the present polypropylene-based resin extruded expanded particles is preferably not more than 10.0%, more preferably not more than 9.0%, more preferably not more than 8.0%, more preferably not more than 7.0%, even more preferably not more than 6.0%, and particularly preferably not more than 5.0%. The lower limit of the open cell ratio of the present polypropylene-based resin extruded expanded particles is not particularly limited, and is, for example, not less than 0.0%. According to this feature, there is the advantage that a polypropylene-based resin in-mold foamed molded product obtained with use of the polypropylene-based resin extruded expanded particles more exhibits characteristics such as the capability of being formed in any shape, shock-absorbing properties, lightweight properties, compressive strength, and heat insulating properties.

In this specification, it is possible to measure the open cell ratio of the polypropylene-based resin extruded expanded particles in accordance with a method described in PROCEDURE C of ASTM D2856-87, with use of an air comparison pycnometer [Model 1000, available from Tokyo Science Co., Ltd.]. A method of measuring the open cell ratio will be described in detail in Examples below.

(3-4. Molding range)

The present polypropylene-based resin extruded expanded particles have the advantage that the molding range thereof is broad (for example, more than 0). In this specification, the "molding range of the polypropylene-based resin extruded expanded particles" is intended to mean a range of a steam pressure during in-mold foam molding in which range it is possible to obtain a polypropylene-based resin in-mold foamed molded product which satisfies the following when in-mold foam molding of the polypropylene-based resin extruded expanded particles is carried out: (x1) the polypropylene-based resin extruded expanded particles are sufficiently fused together; (x2) a gap between the polypropylene-based resin extruded expanded particles is sufficiently filled; (x3) the polypropylene-based resin in-mold foamed molded product has a beautiful surface; (x4) the polypropylene-based resin in-mold foamed molded product does not have a melting surface; (x5) the polypropylene-based resin in-mold foamed molded product has sufficient compressive strength; and (x6) the polypropylene-based resin in-mold foamed molded product does not shrink by not less than 5% with respect to the dimensions of the mold, and the shape of a mold used for in-mold foam molding is transferred to the polypropylene-based resin in-mold foamed molded product. In a case where a polypropylene-based resin in-mold foamed molded product adheres to a mold and cannot be taken out, it is determined that it is impossible to obtain a polypropylene-based resin in-mold foamed molded product. In this specification, for example, in a case where the steam pressure during in-mold foam molding, which steam pressure makes it possible to obtain a polypropylene-based resin in-mold foamed molded product which satisfies the above-described (x1) through (x6) when in-mold foam molding of the polypropylene-based resin extruded expanded particles is carried out, is P1 to P2, a value obtained by P2 - P1 is defined as the "molding range of the polypropylene-based resin extruded expanded particles". In this specification, "P1 to P2" is also referred to as "workable steam pressure range".

In a case where the steam pressure is excessively low for the polypropylene-based resin extruded expanded particles, the following polypropylene-based resin in-mold foamed molded product may be obtained: (a) the polypropylene-based resin extruded expanded particles are insufficiently fused together; (b) a gap between the polypropylene-based resin extruded expanded particles is not sufficiently filled; (c) the polypropylene-based resin in-mold foamed molded product has poor surface appearance; and/or (d) as a result of a shrinkage of the polypropylene-based resin in-mold foamed molded product, the shape of a mold used for in-mold foam molding is not transferred to the polypropylene-based resin in-mold foamed molded product. In a case where the steam pressure is excessively high for the polypropylene-based resin extruded expanded particles, the following polypropylene-based resin in-mold foamed molded product may be obtained: (a) the polypropylene-based resin in-mold foamed molded product has a melting surface and/or (b) the polypropylene-based resin in-mold foamed molded product has insufficient compressive strength.

The workable steam pressure range for the present polypropylene-based resin extruded expanded particles is not particularly limited. It is more preferable that the molding range of the present polypropylene-based resin extruded expanded particles be broader. The molding range of the present polypropylene-based resin extruded expanded particles is preferably more than 0 MPa, more preferably not less than 0.01 MPa, more preferably not less than 0.02 MPa, more preferably more than 0.02 MPa, more preferably not less than 0.03 MPa, even more preferably not less than 0.04 MPa, particularly preferably not less than 0.05 MPa, and most preferably not less than 0.06 MPa.

By molding the present polypropylene-based resin extruded expanded particles, it is possible to obtain a polypropylene-based resin foamed molded product which has excellent compressive strength, excellent fusibility, and/or a beautiful surface. More specifically, by in-mold foam molding of the present polypropylene-based resin extruded expanded particles, it is possible to obtain a polypropylene-based resin in-mold foamed molded product which has excellent compressive strength, excellent fusibility, and/or a beautiful surface.

[4. Method of producing polypropylene-based resin foamed molded product]

A method of producing a polypropylene-based resin foamed molded product in accordance with an embodiment of the present invention includes a step of molding polypropylene-based resin extruded expanded particles produced by the present production method described in the section [2. Method of producing polypropylene-based resin extruded expanded particles]. The method of producing a polypropylene-based resin foamed molded product, which is obtained by molding polypropylene-based resin extruded expanded particles produced by the present production method described in the section [2. Method of producing polypropylene-based resin extruded expanded particles], is also an embodiment of the present invention.

Since the method of producing a polypropylene-based resin foamed molded product in accordance with an embodiment of the present invention has the above-described feature, the method has the advantage that it is possible to provide a polypropylene-based resin foamed molded product having excellent compressive strength. The compressive strength of the polypropylene-based resin foamed molded product produced by the method of producing a polypropylene-based resin foamed molded product in accordance with an embodiment of the present invention is, for example, equal to or more than the following numerical value (compressive strength (MPa)).

The compressive strength (MPa) = {0.0000056 × D$^3$ + 0.062 × D$^2$ - 0.0302 × D + 168}j 1000 In the expression, D is the density (g/L) of the polypropylene-based resin foamed molded product.

A method of molding polypropylene-based resin extruded expanded particles is not particularly limited, and may be, for example, in-mold foam molding with use of a mold. The method of producing a polypropylene-based resin foamed molded product, which method includes a step of carrying out in-mold foam molding of polypropylene-based resin extruded expanded particles produced by the present production method described in the section [2. Method of producing polypropylene-based resin extruded expanded particles], is also an embodiment of the present invention.

Examples

The following description will discuss embodiments of the present invention in more detail with reference to Examples and Comparative Examples. Note that the present invention is not limited to Examples below.

(Measuring method and evaluating method)

[MFR]

A polypropylene-based resin having a branched structure was used as a sample. With use of an MFR measuring apparatus described in JIS K7210, the MFR of the polypropylene-based resin having a branched structure was measured under the following conditions: the diameter φ of an orifice was 2.0959±0.0050 mm; the length of the orifice was 8.000 ±0.025 mm; a load was 2160 g; and a temperature was 230±0.2°C.

[Melt tension]

The melt tension of the polypropylene-based resin having a branched structure was measured with use of a Capilograph 1D (available from TOYO SEIKI SEISAKU-SHO, LTD, Japan). Specifically, the melt tension was measured by the following (1) through (5): (1) a barrel which had a diameter of 9.55 mm and which was heated to 200°C was filled with a sample resin (polypropylene-based resin having a branched structure) for measurement; (2) next, the sample resin was heated for 10 minutes in the barrel which was heated to 200°C; (3) subsequently, while the sample resin was taken out in a strand shape from a capillary die (diameter: 1.0 mm, length: 10 mm) at a piston falling speed kept constant (10 mm/minute), this strand-like sample resin was caused to pass through a pulley which was for detecting a tension and which was located 350 mm below the capillary die, and then wind-up of the strand-like sample resin was started with use of a wind-up roll; (4) after take-off of the strand-like sample resin became stable, the wind-up speed of the strand-like sample resin was increased from an initial speed of 1.0 m/minute to a speed of 200 m/minute at a constant rate in 4 minutes; and (5) a load acting on the pulley, which was equipped with a load cell, at a time when the strand-like sample resin fractured was measured, and a value thus obtained was defined as the melt tension.

[Melting point]

With use of a differential scanning calorimeter (DSC6200, available from Seiko Instruments Inc.), the melting point of polypropylene-based resin extruded expanded particles which melting point was obtained by the following method was regarded as the melting point of a resin mixture, and was put in Tables 1 and 2: (1) the temperature of 5 mg to 6 mg of the polypropylene-based resin extruded expanded particles was increased from 40°C to 220°C at a temperature increase rate of 10°C/minute so that the polypropylene-based resin extruded expanded particles were melted; (2) thereafter, the temperature of the melted polypropylene-based resin extruded expanded particles was decreased from 220°C to 40°C at a temperature decrease rate of 10°C/min so that the polypropylene-based resin extruded expanded particles were crystallized; and (3) then, the temperature of the crystallized polypropylene-based resin extruded expanded particles was increased from 40°C to 220°C at a temperature increase rate of 10°C/min; and (4) a temperature at a peak (melting peak) in a DSC curve of the polypropylene-based resin extruded expanded particles which DSC curve was obtained in the second temperature increase (i.e., in (3)) was defined as the melting point of the polypropylene-based resin extruded expanded particles.

[DSC curve X]

With use of a differential scanning calorimeter (DSC6200, available from Seiko Instruments Inc.), the DSC curve X of the polypropylene-based resin extruded expanded particles was obtained by heating 5 mg to 6 mg of the polypropylene-based resin extruded expanded particles from 40°C to 220°C at a temperature increase rate of 10°C/minute.

[Bulk density]

The bulk density of the polypropylene-based resin extruded expanded particles was calculated by sequentially carrying out the following (1) through (3): (1) the polypropylene-based resin extruded expanded particles were put in a container, such as a graduated cylinder, a beaker, or a pail, the volume V (cm$^3$) of which was known, until the container overflowed with the polypropylene-based resin extruded expanded particles; (2) a surface (upper end) of the polypropylene-based resin extruded expanded particles in the container was made level, and the weight W (g) of the polypropylene-based resin extruded expanded particles in the container was measured; and (3) the bulk density of the polypropylene-based resin extruded expanded particles was calculated by the following expression:

The bulk density (g/L) = the weight W (g) of the expanded particles/{the volume V (cm$^3$) of the container/1000}. A value thus obtained was put in Tables 1 and 2.

[Open cell ratio]

The open cell ratio of the polypropylene-based resin extruded expanded particles was measured by the following method. With use of an air comparison pycnometer [Model 1000, available from Tokyo Science Co., Ltd.], the volume Vc (cm$^3$) of the obtained polypropylene-based resin extruded expanded particles was measured in accordance with a method described in PROCEDURE C of ASTM D2856-87. Next, the whole polypropylene-based resin extruded expanded particles of which Vc had been measured were submerged in ethanol in a graduated cylinder. Thereafter, the apparent volume Va (cm$^3$) of the polypropylene-based resin extruded expanded particles was determined from how much a position (liquid surface) of the ethanol in the graduated cylinder rose. This method of measuring the volume Va is also referred to as a submersion method. The open cell ratio of the polypropylene-based resin extruded expanded particles was calculated by the following expression:

$$\text{The open cell ratio (\%)} = (Va - Vc) \times 100/Va.$$

A value thus obtained was put in Tables 1 and 2.

[Molding range]

First, a mold having a block shape (a molding space: 381 mm in length × 381 mm in width × variable thickness) was caused to be in a state where the thickness of the molding space was 78 mm (gap-in-mold rate: 30%). Next, the molding space in the mold was filled with the polypropylene-based resin extruded expanded particles. Then, the mold was moved so that the thickness of the molding space in the mold became 60 mm, and thereby the molding space was compressed. Subsequently, air in the mold was expelled by steam at 0.10 MPa (gage pressure). Thereafter, the polypropylene-based resin extruded expanded particles were heated for 10 seconds with use of steam at a steam pressure of 0.20 MPa to 0.44 MPa (gage pressure) and in-mold foam molding of the polypropylene-based resin extruded expanded particles was carried out to obtain a polypropylene-based resin foamed molded product. Here, the in-mold foam molding was carried out while the steam pressure was changed at 0.02 MPa intervals. In so doing, a range of the steam pressure during the in-mold foam molding, in which range it was possible to obtain a polypropylene-based resin in-mold foamed molded product which satisfied the following (x1) through (x5), was determined, and the obtained range of the steam pressure was defined as P1 to P2: (x1) the polypropylene-based resin extruded expanded particles were sufficiently fused together (rate of fusion); (x2) a gap between the polypropylene-based resin extruded expanded particles was sufficiently filled; (x3) the polypropylene-based resin in-mold foamed molded product had a beautiful surface; (x4) the polypropylene-based resin in-mold foamed molded product did not have a melting surface; and (x5) the polypropylene-based resin in-mold foamed molded product did not shrink, and the shape of the mold used for the in-mold foam molding was transferred to the polypropylene-based resin in-mold foamed molded product.

Here, evaluation of the rate of fusion in (x1), evaluation of the gap between the particles in (x2), evaluation of the surface appearance in (x3), evaluation of the surface melting state in (x4), and evaluation of the rate of shrinkage in (x5) were carried out as follows. Note that the evaluation of each of (x1) through (x5) was carried out with use of the polypropylene-based resin foamed molded product which had been obtained by the above-described method and which had been left to stand alone in a drying chamber at 75°C for not shorter than 16 hours so as to be dried and had been further left to stand alone at 23°C for not shorter than 24 hours.

(Evaluation of rate of fusion)

With use of a knife or the like, a cut of approximately 5 mm was made from a location approximately 100 mm away from a corner of the polypropylene-based resin foamed molded product to a location approximately 100 mm away from the opposite corner. A part which was surrounded by (i) a part in which the cut was made and (ii) a corner was beaten with use of a hammer or the like so that the cut part was fractured. A fracture surface was visually observed, and the total number of extruded expanded particles which were present on the fracture surface and the number of extruded expanded particles which were present on the fracture surface and of which the insides were fractured were counted. A ratio (%) of the number of extruded expanded particles which were present on the fracture surface and of which the insides were fractured to the total number of extruded expanded particles which were present on the fracture surface was calculated. The foamed molded product which had a ratio of not less than 60% was evaluated as acceptable. The foamed molded product which had a ratio of less than 60% was evaluated as unacceptable.

(Evaluation of inter-particle gap)

In areas which each measured 100 mm in length and 100 mm in width and which respectively included the centers of both surfaces (i.e., surfaces perpendicular to a thickness direction) out of surfaces of the polypropylene-based resin foamed molded product, the extruded expanded particles were visually observed, and the number of gaps between the extruded expanded particles (i.e., parts dimpled with respect to the surfaces) was counted. The foamed molded product in which the number of gaps between the extruded expanded particles was not more than 20 was evaluated as acceptable. The foamed molded product in which the number of gaps between the extruded expanded particles was not less than 21 was evaluated as unacceptable.

(Evaluation of surface appearance)

In the longest piece out of edge parts of the polypropylene-based resin foamed molded product, the extruded expanded particles were visually observed and the number of gaps between the extruded expanded particles (i.e., parts dimpled with respect to a surface) was counted. The foamed molded product in which the number of gaps between the extruded expanded particles was not more than 3 was evaluated as acceptable. The foamed molded product in which the number of gaps between the extruded expanded particles was not less than 4 was evaluated as unacceptable.

(Evaluation of surface melting state)

The surface melting state of the polypropylene-based resin foamed molded product was evaluated with use of the polypropylene-based resin foamed molded product which had been obtained immediately after the molding and which had not been dried and left to stand alone. Specifically, in a case where (a) the polypropylene-based resin foamed molded product immediately after the molding could not be ejected from the mold because, for example, the foamed molded product adhered to the mold or (b) a part of a surface of the foamed molded product, such as a part of a surface of the foamed molded product which part corresponded to a steam slit, remained on the mold even when the foamed molded product could be ejected from the mold, the foamed molded product was evaluated as unacceptable. In the other cases, the foamed molded product was evaluated as acceptable.

(Evaluation of rate of shrinkage)

The dimensions, i.e., of the length, width, and thickness of the polypropylene-based resin foamed molded product were measured. With use of obtained results, the rate of shrinkage (%) of each of the dimensions, i.e., the length, width, and thickness of the polypropylene-based resin foamed molded product was evaluated by the following expression:

{(The dimensions of the molding space in the mold) - (the dimensions of the molded product)} × 100/the dimensions of the molding space in the mold In a case where the rate of shrinkage of each of the length, width, and thickness was not more than 5%, the foamed molded product was evaluated as acceptable. In a case where the rate of shrinkage of any one of the length, width, and thickness was more than 5%, the foamed molded product was evaluated as unacceptable. Note that the dimensions of the molding space in the mold were 381 mm in length, 381 mm in width, and 60 mm in thickness.

The range "P1 to P2" of the steam pressure was defined as "workable steam pressure range", and the "value" obtained by P2 - P1 was defined as "molding range of the polypropylene-based resin extruded expanded particles". The "workable steam pressure range" and the "molding range of the polypropylene-based resin extruded expanded particles" were put in the columns "steam pressure range" and "molding range", respectively, in Tables 1 and 2.

[Compressive strength]

A test piece measuring 50 mm in length, 50 mm in width, and 50 mm in thickness was cut out from the polypropylene-based resin in-mold foamed molded product obtained in each of Examples and Comparative Examples. Note, here, that, one of surfaces of the polypropylene-based resin in-mold foamed molded product which were perpendicular to the thickness direction was cut off. That is, out of the surfaces of the polypropylene-based resin in-mold foamed molded product which were perpendicular to the thickness direction, a surface which was not cut off was a surface which had been in contact with the mold during the in-mold foam molding (also referred to as a skin layer). The test piece was compressed a rate of 10% of a thickness (approximately 5 mm/minute) and a value of a compressive stress at a time when the test piece was compressed by 50% was measured. This measurement was carried out with use of a tension and compression testing machine (e.g., TG-50 kN, available from MinebeaMitsumi Inc.) in accordance with ISO 844. The obtained value was defined as the compressive strength of the polypropylene-based resin in-mold foamed molded product.

[Moldability]

The moldability was evaluated on the basis of the following criteria, and results of the evaluation were put in Tables 1 and 2.

E (excellent): The molding range was not less than 0.06 MPa, and the compressive strength was equal to or more than a numerical value (compressive strength (MPa)) calculated by an expression below.
G (good): The molding range was not less than 0.04 MPa and less than 0.06 MPa, and the compressive strength was equal to or more than a numerical value (compressive strength (MPa)) calculated by the expression below.
S (standard): The molding range was not less than 0.04 MPa and less than 0.06 MPa, and the compressive strength was less than a numerical value (compressive strength (MPa)) calculated by the expression below.
D (defective): The molding range was more than 0.02 MPa and less than 0.04 MPa, and the compressive strength was less than a numerical value (compressive strength (MPa)) calculated by the expression below.
B (very bad): The molding range was not more than 0.02 MPa.

The compressive strength (MPa) = $\{0.0000056 \times D^3 + 0.062 \times D^2 - 0.0302 \times D + 168\}/1000$

where D is the density (g/L) of the test piece.

(Polypropylene-based resin having branched structure)

(Preparation of resin A)

A polypropylene-based resin having a branched structure (resin A) was produced by sequentially carrying out the following (1) through (5): (1) 100 parts by weight of a random polypropylene resin (F-724NPC, available from Prime Polymer Co., Ltd.) and 1.0 part by weight of a radical polymerization initiator were fed, at 70 kg/h, to a twin screw extruder having a screw diameter φ of 45 mm; (2) from an injection part provided in the middle of the twin screw extruder, 0.45 parts by weight of isoprene, with respect to 100 parts by weight of the random polypropylene resin, was fed as a conjugated diene-based compound; (3) a mixture thus obtained in the twin screw extruder was melted and kneaded at a cylinder temperature of 200°C and a screw rotational speed of 230 rpm; (4) a melted and kneaded material thus obtained was extruded through a die provided at an end of the twin screw extruder, and the melted and kneaded product thus extruded (strand) was cooled in a water tank; and (5) the strand was cut with use of a pelletizer, provided subsequently to the water tank, to obtain a polypropylene-based resin having a branched structure. The MFR of the obtained polypropylene-based resin having a branched structure (resin A) was 2.3 g/10 minutes. The melt tension of the obtained polypropylene-based resin having a branched structure (resin A) was 12 cN.

As described above, the resin A was a polypropylene-based resin having a branched structure which was obtained by a method of melting and kneading a polypropylene-based resin in which a branched structure was not introduced, a conjugated diene compound (isoprene), and a radical polymerization initiator.

(Resin B)

A polypropylene-based resin having a high melt tension (WB140HMS, available from Borealis) was used as a polypropylene-based resin having a branched structure (resin B). The MFR of the polypropylene-based resin having a branched structure (resin B) was 2.1 g/10 minutes. The melt tension of the obtained polypropylene-based resin having a branched structure (resin B) was 14cN.

Note that the resin B was a polypropylene-based resin having a branched structure which was obtained by a method of melting and kneading a polypropylene-based resin in which a branched structure was not introduced, a conjugated diene compound, and a radical polymerization initiator.

Examples and Comparative Examples are described below. Note that, in Examples and Comparative Examples, a device in which a twin screw extruder (kneading device) having a screw diameter $\varphi$ of 26 mm, a melt cooler (cooling device), a diverter valve, and a die were coupled in series in this order was used as an extruder used to produce polypropylene-based resin extruded expanded particles. As the die, a die which had three holes each having a hole diameter of 0.8 mm was used. A thermometer for measuring a temperature A was set near an outlet of the diverter valve, specifically, at a location 10 mm upstream from an inlet of the die along an extrusion direction, so as to be in contact with a composition.

(Example 1)

Polypropylene-based resin extruded expanded particles of Example 1 were produced by the following method: (1) 99.8 parts by weight of a polypropylene resin having a branched structure (resin A) and 0.2 parts by weight of talc, which was a cell nucleating agent, were blended to prepare a resin mixture; (2) the resin mixture was introduced into the twin screw extruder included in the extruder, and the resin mixture started to be melted and kneaded; (3) in the middle of the melting and kneading of the resin mixture, 3 parts by weight of carbon dioxide, with respect to 100 parts by weight of the resin mixture, was injected into the twin screw extruder as a blowing agent to prepare a composition; (4) the composition was melted and kneaded at 200°C; (5) the composition was caused to enter the die provided at an end of the extruder; (6) the composition having been caused to pass through the die was extruded into a region which was filled with water as a liquid phase and which was at a lower pressure than the extruder; (7) immediately after passing through the die, the composition was cut with use of a cutter in the region which was filled with water (liquid phase); and (8) the cut composition was supplied to a centrifugal dehydrator to obtain polypropylene-based resin extruded expanded particles. The weight per polypropylene-based resin extruded expanded particle obtained was 2 mg/particle.

In Example 1, (a) the temperature B of the liquid phase (water) and (b) the pressure of water (water pressure) with respect to the composition in the region which was filled with water were set to a temperature shown in Table 1. In Example 1, by adjusting various conditions, the temperature A of the composition immediately after entering the die was adjusted to a temperature shown in Table 1.

(Example 2)

Polypropylene-based resin extruded expanded particles were obtained in the same manner as that in Example 1, except that the temperature A of a composition immediately after entering the die was adjusted to a temperature shown in Table 1 by adjusting various conditions. The weight per polypropylene-based resin extruded expanded particle obtained was 2 mg/particle.

(Comparative Example 1)

An attempt was made to obtain polypropylene-based resin extruded expanded particles in the same manner as that in Example 1, except that the temperature A of a composition immediately after entering the die was adjusted to a temperature shown in Table 1 by adjusting various conditions. However, since the composition solidified in the die and accordingly clogged an outlet of the die, it was impossible to extrude the composition and thus impossible to obtain polypropylene-based resin extruded expanded particles. Therefore, "die clogging" was put in the columns "steam pressure range" and "molding range" in Table 2.

(Comparative Example 2)

Polypropylene-based resin extruded expanded particles were obtained in the same manner as that in Example 1, except that the temperature A of a composition immediately after entering the die was adjusted to a temperature shown in Table 1 by adjusting various conditions. The weight per polypropylene-based resin extruded expanded particle obtained was 2 mg/particle.

(Example 3)

Polypropylene-based resin extruded expanded particles of Example 3 were produced by the following method: (1) 95.55 parts by weight of a polypropylene resin having a branched structure (resin A), 4.25% by weight of a carbon masterbatch having a carbon concentration of 40%, and 0.2 parts by weight of talc, which was a cell nucleating agent, were blended to prepare a resin mixture; (2) the resin mixture was introduced into the twin screw extruder included in the extruder, and the resin mixture started to be melted and kneaded; (3) in the middle of the melting and kneading of the resin mixture, 3 parts by weight of carbon dioxide, with respect to 100 parts by weight of the resin mixture, was injected into the twin screw extruder as a blowing agent to prepare a composition; (4) the composition was melted and kneaded at 200°C; (5) the composition was caused to enter the die provided at the end of the extruder, and the temperature A of the composition immediately after entering the die was measured; (6) the composition was caused to pass through the die, and extruded into a region which was filled with water as a liquid phase and which was at a lower pressure than the extruder; (7) immediately after passing through the die, the composition was cut with use of a cutter in the region which was filled with water; and (8) the cut composition was supplied to a centrifugal dehydrator to obtain polypropylene-based resin extruded expanded particles. The weight per polypropylene-based resin extruded expanded particle obtained was 2 mg/particle.
The carbon masterbatch having a carbon concentration of 40% was prepared as follows. Carbon black was blended with a polypropylene-based resin (WB140HMS, available from Borealis) so that the concentration of the carbon black became 40%, and a mixture thus obtained was melted and kneaded in an extruder. A melted and kneaded material thus obtained was extruded into water and cut. In this manner, the carbon masterbatch was produced. The carbon masterbatch having a carbon concentration of 40% was expressed as "carbon MB" in Tables 1 and 2.
In Example 3, (a) the temperature B of the liquid phase (water) and (b) the pressure of water (water pressure) with respect to the composition in the region which was filled with water were set to a temperature shown in Table 1. In Example 3, by adjusting various conditions, the temperature A of the composition immediately after entering the die was adjusted to a temperature shown in Table 1.

(Examples 4 through 9 and Comparative Example 3)

Polypropylene-based resin extruded expanded particles were obtained in the same manner as that in Example 3, except that (a) the amount, with respect to 100 parts by weight of a resin mixture, of carbon dioxide injected into the twin screw extruder in the middle of melting and kneading of the resin mixture was changed to an amount shown in Table 1, (b) the temperature B of a liquid phase (water) was changed to a temperature shown in Table 1, (c) a water pressure was changed to a temperature shown in Table 1, and/or (d) the temperature A of a composition immediately after entering the die was adjusted to a temperature shown in Table 1 by adjusting various conditions. The weight per polypropylene-based resin extruded expanded particle obtained was 2 mg/particle.

(Comparative Examples 4 and 5)

An attempt was made to obtain polypropylene-based resin extruded expanded particles in the same manner as that in Example 3, except that (a) the temperature B of a liquid phase (water) was changed to a temperature shown in Table 1, (b) a water pressure was changed to a temperature shown in Table 1, and/or (c) the temperature A of a composition immediately after entering the die was adjusted to a temperature shown in Table 1 by adjusting various conditions. However, since the composition solidified in the die and accordingly clogged an outlet of the die, it was impossible to extrude the composition and thus impossible to obtain polypropylene-based resin extruded expanded particles. Therefore, "die clogging" was put in the columns "steam pressure range" and "molding range" in Table 2.

(Example 10 and Comparative Example 6)

Polypropylene-based resin extruded expanded particles were obtained in the same manner as that in Example 3, except that (a) as a polypropylene-based resin having a branched structure, the resin B was used instead of the resin A, (b) the pressure of water (water pressure) with respect to a composition in a region which was filled with water was changed to a pressure shown in Table 1, and (c) the temperature A of the composition immediately after entering the die was adjusted to a temperature shown in Table 1 by adjusting various conditions. The weight per polypropylene-based resin extruded expanded particle obtained was 2 mg/particle.

A DSC curve X of the polypropylene-based resin extruded expanded particles obtained in each of Examples and Comparative Examples other than Comparative Examples 1, 4, and 5, in which the die was clogged, was measured by the above-described method. As a result, the polypropylene-based resin extruded expanded particles obtained in each of Examples and Comparative Examples other than Comparative Examples 1, 4, and 5 had the characteristic that a single crystallization peak was present in the DSC curve X. Furthermore, the melting point (melting point of the resin mixture), the bulk density, the open cell ratio, the molding range, and the moldability of the polypropylene-based resin extruded expanded particles obtained in each of Examples and Comparative Examples other than Comparative Examples 1, 4, and 5, in which the die was clogged, were measured and evaluated by the above-described methods. Table 1 and 2 show results of the measurement and evaluation.

(Production of polypropylene-based resin foamed molded product)

With use of the polypropylene-based resin extruded expanded particles obtained in Example 1, a polypropylene-based resin foamed molded product was produced by the following method.

First, a mold having a block shape (a molding space: 381 mm in length $\times$ 381 mm in width $\times$ variable thickness) was caused to be in a state where the thickness of the molding space was 78 mm (gap-in-mold rate: 30%). Next, the molding space in the mold was filled with the polypropylene-based resin extruded expanded particles. Then, the mold was moved so that the thickness of the molding space in the mold became 60 mm, and thereby the molding space was compressed. Subsequently, air in the mold was expelled by steam at 0.10 MPa (gage pressure). Thereafter, the polypropylene-based resin extruded expanded particles were heated for 10 seconds with use of steam at a steam pressure of 0.24 MPa (gage pressure) to 0.30 MPa (gage pressure), and molded to obtain a polypropylene-based resin foamed molded product.

The obtained polypropylene-based resin foamed molded product was evaluated as acceptable for all of the above-described (x1) to (x5), and the compressive strength thereof measured by the method described in the [Compressive strength] satisfied the following expression:

The compressive strength (MPa) = $\{0.0000056 \times D^3 + 0.062 \times D^2 - 0.0302 \times D + 168\}/1000$

Namely, the polypropylene-based resin foamed molded product obtained by molding the polypropylene-based resin extruded expanded particles obtained in Example 1 had the advantage of exhibiting sufficient compressive strength.

## [Table 1]

| | | | | | Example 1 | Example 2 | Example 3 | Example 4 | Example 5 | Example 6 | Example 7 | Example | Example 9 | Example 10 |
|---|---|---|---|---|---|---|---|---|---|---|---|---|---|---|
| Formulation of composition | Resin mixture | Polypropylene-based resin having branched structure | Resin A | [Parts by weight] | 99.8 | 99.8 | 95.55 | 95.55 | 95.55 | 95.55 | 95.55 | 95.55 | 95.55 | - |
| | | | Resin B | [Parts by weight] | - | - | - | - | - | - | - | - | - | 95.55 |
| | | Coloring agent | Carbon MB | [Parts by weight] | - | - | 4.25 | 4.25 | 4.25 | 4.25 | 4.25 | 4.25 | 4.25 | 4.25 |
| | | Cell nucleating agent | Talc | [Parts by weight] | 0.2 | 0.2 | 0.2 | 0.2 | 0.2 | 0.2 | 0.2 | 0.2 | 0.2 | 0.2 |
| | Carbonic acid gas | | | [Parts by weight] | 3 | 3 | 3 | 3 | 3 | 3 | 3 | 2.5 | 2.5 | 3 |
| Melting point of resin mixture | | | | [°C] | 147.5 | 147.5 | 147.7 | 147.7 | 147.7 | 147.7 | 147.7 | 147.7 | 147.7 | 160.6 |
| Production method | | Temperature A of composition immediately after entering die | | [°C] | 160 | 170 | 166 | 162 | 161 | 161 | 163 | 166 | 162 | 178 |
| | | Temperature B of liquid phase | | [°C] | 80 | 80 | 80 | 80 | 60 | 40 | 25 | 80 | 80 | 80 |
| | | Water pressure | | [MPa·G] | 0.35 | 0.35 | 0.35 | 0.35 | 0.30 | 0.20 | 0.10 | 0.15 | 0.15 | 0.30 |
| | | T | | [-] | 13.6 | 22.8 | 18.9 | 15.2 | 12.7 | 11.1 | 11.8 | 17.7 | 14.0 | 17.1 |
| Physical properties etc. of polypropylene-based resin extruded expanded particles | | Bulk density | | [g/L] | 90 | 90 | 90 | 90 | 90 | 90 | 100 | 90 | 90 | 90 |
| | | Open cell ratio | | [%] | 3 | 5 | 4 | 3 | 3 | 3 | 2 | 3 | 3 | 3 |
| | | Steam pressure range | | [MPa·G] | 0.24-0.30 | 0.26-0.30 | 0.26-0.30 | 0.24-0.30 | 0.24-0.30 | 0.24-0.30 | 0.24-0.30 | 0.24-0.30 | 0.24-0.30 | 0.38-0.42 |
| | | Molding range | | [MPa·G] | 0.06 | 0.04 | 0.04 | 0.06 | 0.06 | 0.06 | 0.06 | 0.06 | 0.06 | 0.04 |
| | | Moldability | | [-] | E | G | G | E | E | E | E | E | E | G |

EP 4 209 537 B1

[Table 2]

| | | | | Comparative Example 1 | Comparative Example 2 | Comparative Example 3 | Comparative Example 4 | Comparative Example 5 | Comparative Example 6 |
|---|---|---|---|---|---|---|---|---|---|
| Formulation of composition | Resin mixture | Polypropylene-based resin having branched structure | Resin A | [Parts by weight] | 99.8 | | 95.55 | | | - |
| | | | Resin B | [Parts by weight] | - | | - | | | 95.55 |
| | | Coloring agent | Carbon MB | [Parts by weight] | - | | 4.25 | | | 4.25 |
| | | Cell nucleating agent | Talc | [Parts by weight] | 0.2 | | 0.2 | | | 0.2 |
| | Carbonic acid gas | | | [Parts by weight] | 3 | 3 | 3 | 3 | 3 | 3 |
| Melting point of resin mixture | | | | [°C] | 147.5 | 147.5 | 147.7 | 147.7 | 147.7 | 160.6 |
| Production method | | Temperature A of composition immediately after entering die | | [°C] | 155 | 175 | 175 | 156 | 160 | 190 |
| | | Temperature B of liquid phase | | [°C] | 80 | 80 | 80 | 80 | 25 | 80 |
| | | Water pressure | | [MPa·G] | 0.35 | 0.35 | 0.30 | 0.30 | 0.10 | 0.30 |
| | | T | | [-] | 9.0 | 27.4 | 27.2 | 9.7 | 9.0 | 28.1 |

| | | | Comparative Example 1 | Comparative Example 2 | Comparative Example 3 | Comparative Example 4 | Comparative Example 5 | Comparative Example 6 |
|---|---|---|---|---|---|---|---|---|
| Physical properties etc. of polypropylene-based resin extruded expanded particles | Bulk density | [g/L] | - | 90 | 90 | - | - | 90 |
| | Open cell ratio | [%] | - | 11 | 13 | - | - | 12 |
| | Steam pressure range | [MPa·G] | Die clogging | 0.26-0.30 | 0.30 | Die clogging | Die clogging | 0.42 |
| | Molding range | [MPa·G] | | 0.04 | 0 | | | 0 |
| | Moldability | [-] | - | S | B | - | - | B |

EP 4 209 537 B1

As is clear from Tables 1 and 2, it is found that the method of producing polypropylene-based resin extruded expanded particles in accordance with an embodiment of the present invention makes it possible to inexpensively provide polypropylene-based resin extruded expanded particles having excellent moldability. Further, the molding range of the polypropylene-based resin extruded expanded particles of Comparative Examples 3 and 6 is 0 MPa, and is not more than 0.02 MPa. It is presumed that in a case where such polypropylene-based resin extruded expanded particles that have a molding range of not more than 0.02 MPa are subjected to in-mold foam molding with use of a mold having a complicated shape, it is highly unlikely that a polypropylene-based resin in-mold foamed molded product to which the shape of the mold is transferred can be obtained. The reason for this is considered as follows. That is, in a case where in-mold foam molding is carried out with use of a mold having a complicated shape, the degree to which steam comes into contact with polypropylene-based resin extruded expanded particles in the mold differs, for example. Thus, a part in which a steam pressure with respect to the polypropylene-based resin extruded expanded particles is high and a part in which the steam pressure is low coexist in the mold.

Industrial Applicability

An embodiment of the present invention makes it possible to inexpensively provide polypropylene-based resin extruded expanded particles having excellent moldability. Therefore, an embodiment of the present invention can be suitably used to obtain a polypropylene-based resin in-mold foamed molded product which is excellent in capability of being formed in any shape, shock-absorbing properties, lightweight properties, heat insulating properties, and the like. Therefore, an embodiment of the present invention can be suitably used in the fields of automotive interior materials, shock-absorbing materials, packaging materials, heat insulating materials, and the like.

## Claims

1. A method of producing polypropylene-based resin extruded expanded particles, comprising the steps of:

   (a) melting and kneading, with use of an extruder including a die, a composition containing a blowing agent and a resin mixture that contains a polypropylene-based resin having a branched structure;
   (b) extruding, through the die, the composition into a region which is a liquid phase and which is at a lower pressure than the extruder;
   (c) cutting the composition in the region; and
   (d) obtaining polypropylene-based resin extruded expanded particles,
   the blowing agent being carbon dioxide,
   an amount of the blowing agent used being 0.5 parts by weight to 7.0 parts by weight with respect to 100.0 parts by weight of the resin mixture,
   a temperature A of the composition immediately after entering the die being a melting point of the resin mixture + 0°C to the melting point + 30°C,
   a temperature B of the liquid phase being 20°C to 90°C,
   a value T, calculated by the following expression (1), being 10 to 25:

   $$T = \text{(the temperature A)} - \text{(the melting point)} + \text{(the --> amount of the blowing agent used)} \times 2.5 - \{\text{(the temperature A - the temperature B)} \times 0.08\} \qquad \text{expression (1),}$$

   the melting point of the resin mixture being measured by the method defined in the description.

2. The method as set forth in claim 1, wherein, in the region, a pressure of the liquid phase with respect to the composition is 0.05 MPa·G to 0.60 MPa·G.

3. The method as set forth in claim 1 or 2, wherein a bulk density of the polypropylene-based resin extruded expanded particles is 40 g/L to 300 g/L, the bulk density being measured by the method defined in the description.

4. The method as set forth in any one of claims 1 through 3, wherein an open cell ratio of the polypropylene-based resin extruded expanded particles is not more than 10.0%, the open cell ratio being measured by the method defined in the description.

5. The method as set forth in any one of claims 1 through 4, wherein the melting point of the resin mixture is 130°C to 165°C.

6. The method as set forth in any one of claims 1 through 5, wherein a melt tension of the polypropylene-based resin having a branched structure is 3 cN to 20 cN, the melt tension being measured by the method defined in the description.

7. The method as set forth in any one of claims 1 through 6, wherein the polypropylene-based resin having a branched structure is obtained by a method of melting and kneading a polypropylene-based resin in which a branched structure is not introduced, a conjugated diene compound, and a radical polymerization initiator.

8. The method as set forth in any one of claims 1 through 7, wherein a melt flow rate at 230°C (2.160 kg) of the polypropylene-based resin having a branched structure is 0.5 g/10 minutes to 20.0 g/10 minutes.

9. A method of producing a polypropylene-based resin foamed molded product, comprising the step of
molding polypropylene-based resin extruded expanded particles produced by a method recited in any one of claims 1 through 8.

**Patentansprüche**

1. Ein Verfahren zur Herstellung von extrudierten expandierten Teilchen von Harz auf Polypropylenbasis, umfassend die Schritte:

   (a) Schmelzen und Kneten, unter Verwendung eines Extruders enthaltend eine Düse, einer Zusammensetzung, welche ein Schäummittel und ein Harzgemisch, enthaltend ein Harz auf Polypropylenbasis, wobei das Harz eine verzweigte Struktur aufweist, enthält;
   (b) Extrudieren der Zusammensetzung durch die Düse in einen Bereich, welcher eine flüssige Phase ist und in welchem ein niedrigerer Druck als im Extruder herrscht;
   (c) Schneiden der Zusammensetzung in dem Bereich; und
   (d) Erhalten der extrudierten expandierten Teilchen von Harz auf Polypropylenbasis, wobei das Schäummittel Kohlendioxid ist,

   wobei eine Menge des verwendeten Schäummittels 0,5 Gewichtsteile bis 7,0 Gewichtsteile beträgt, bezogen auf 100,0 Gewichtsteile des Harzgemisches,
   wobei eine Temperatur A der Zusammensetzung unmittelbar nach dem Eintritt in die Düse von einem Schmelzpunkt des Harzgemisches + 0°C bis zum Schmelzpunkt + 30°C entspricht,
   wobei eine Temperatur B der flüssigen Phase 20°C bis 90°C beträgt,
   wobei ein Wert T, berechnet durch den folgenden Ausdruck (1), 10 bis 25 beträgt:

   $$T = \text{(die Temperatur A)} - \text{(der Schmelzpunkt)} + \text{(die Menge des verwendeten Schäummittels)} \times 2{,}5 - \{\text{(die Temperatur A} - \text{die Temperatur B)} \times 0{,}08\} \qquad \text{Ausdruck (1),}$$

   wobei der Schmelzpunkt des Harzgemisches durch das in der Beschreibung definierte Verfahren gemessen wird.

2. Das Verfahren gemäß Anspruch 1, wobei, in dem Bereich, ein Druck der flüssigen Phase, bezogen auf die Zusammensetzung, 0,05 MPa·G bis 0,60 MPa·G beträgt.

3. Das Verfahren gemäß Anspruch 1 oder 2, wobei eine Schüttdichte der extrudierten expandierten Teilchen von Harz auf Polypropylenbasis 40 g/l bis 300 g/l beträgt, wobei die Schüttdichte durch das in der Beschreibung definierte Verfahren gemessen wird.

4. Das Verfahren gemäß einem der Ansprüche 1 bis 3, wobei ein Anteil von offenen Zellen der extrudierten expandierten Teilchen von Harz auf Polypropylenbasis nicht mehr als 10,0% beträgt, wobei der Anteil an offenen Zellen durch das in der Beschreibung definierte Verfahren gemessen wird.

5. Das Verfahren gemäß einem der Ansprüche 1 bis 4, wobei der Schmelzpunkt des Harzgemisches 130°C bis 165°C beträgt.

**6.** Das Verfahren gemäß einem der Ansprüche 1 bis 5, wobei eine Schmelzspannung des Harzes auf Polypropylenbasis, wobei das Harz eine verzweigte Struktur aufweist, 3 cN bis 20 cN beträgt, wobei die Schmelzspannung durch das in der Beschreibung definierte Verfahren gemessen wird.

**7.** Das Verfahren gemäß einem der Ansprüche 1 bis 6, wobei das Harz auf Polypropylenbasis, wobei das Harz eine verzweigte Struktur aufweist, durch ein Verfahren des Schmelzens und Knetens eines Harzes auf Polypropylenbasis, wobei in dem Harz keine verzweigte Struktur enthalten ist, einer konjugierten Dienverbindung und eines radikalischen Polymerisationsinitiators erhalten wird.

**8.** Das Verfahren gemäß einem der Ansprüche 1 bis 7, wobei eine Schmelzflußrate bei 230°C (2,160 kg) des Harzes auf Polypropylenbasis, wobei das Harz eine verzweigte Struktur aufweist, 0,5 g/10 Minuten bis 20,0 g/10 Minuten beträgt.

**9.** Ein Verfahren zur Herstellung eines geschäumten geformten Produktes von Harz auf Polypropylenbasis, umfassend den Schritt

Formen der extrudierten expandierten Teilchen von Harz auf Polypropylenbasis, welche durch ein Verfahren gemäß einem der Ansprüche 1 bis 8 hergestellt wurden.


## Revendications

**1.** Méthode de production de particules expansées extrudées en résine à base de polypropylène, comprenant les étapes de :

(a) fusion et malaxage, au moyen d'une extrudeuse comprenant une filière, d'une composition contenant un agent gonflant et un mélange de résine qui contient une résine à base de polypropylène ayant une structure ramifiée ;
(b) extrusion, à travers la filière, de la composition dans une région qui est une phase liquide et qui est sous une pression inférieure à celle de l'extrudeuse ;
(c) découpage de la composition dans la région ; et
(d) obtention de particules expansées extrudées en résine à base de polypropylène, l'agent gonflant étant le dioxyde de carbone,

la quantité utilisée de l'agent gonflant étant de 0,5 partie en poids à 7,0 parties en poids pour 100,0 parties en poids du mélange de résine,
la température A de la composition immédiatement après l'entrée dans la filière étant du point de fusion du mélange de résine + 0 °C au point de fusion + 30 °C,
la température B de la phase liquide étant de 20 °C à 90 °C,
la valeur T, calculée par l'expression (1) qui suit, étant de 10 à 25 :

$$T = \text{(la température A)} - \text{(le point de fusion)} + \text{(la quantité utilisée de l'agent gonflant)} \times 2{,}5 - \{\text{(la température A - la température B)} \times 0{,}08\} \qquad \text{expression (1)}$$

le point de fusion du mélange de résine étant mesuré par la méthode définie dans la description.

**2.** Méthode selon la revendication 1, dans laquelle, dans la région, la pression de la phase liquide par rapport à la composition est de 0,05 MPa·G à 0,60 MPa·G.

**3.** Méthode selon la revendication 1 ou 2, dans laquelle la masse volumique apparente des particules expansées extrudées en résine à base de polypropylène est de 40 g/l à 300 g/l, la masse volumique apparente étant mesurée par la méthode définie dans la description.

**4.** Méthode selon l'une quelconque des revendications 1 à 3, dans laquelle la proportion des alvéoles ouvertes des particules expansées extrudées en résine à base de polypropylène n'est pas supérieure à 10,0 %, la proportion des alvéoles ouvertes étant mesurée par la méthode définie dans la description.

**5.** Méthode selon l'une quelconque des revendications 1 à 4, dans laquelle le point de fusion du mélange de résine est de 130 °C à 165 °C.

6. Méthode selon l'une quelconque des revendications 1 à 5, dans laquelle la tension à l'état fondu de la résine à base de polypropylène ayant une structure ramifiée est de 3 cN à 20 cN, la tension à l'état fondu étant mesurée par la méthode définie dans la description.

7. Méthode selon l'une quelconque des revendications 1 à 6, dans laquelle la résine à base de polypropylène ayant une structure ramifiée est obtenue par une méthode de fusion et de malaxage d'une résine à base de polypropylène dans laquelle une structure ramifiée n'est pas introduite, d'un composé diène conjugué, et d'un amorceur de polymérisation radicalaire.

8. Méthode selon l'une quelconque des revendications 1 à 7, dans laquelle l'indice de fluidité à 230 °C (2,160 kg) de la résine à base de polypropylène ayant une structure ramifiée est de 0,5 g/10 minutes à 20,0 g/10 minutes.

9. Méthode de production d'un produit moulé expansé en résine à base de polypropylène, comprenant l'étape de moulage des particules expansées extrudées en résine à base de polypropylène produites par une méthode indiquée dans l'une quelconque des revendications 1 à 8.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111171366
- CN 109228003
- CN 111253677
- JP 7011041 A
- WO 2018006040 A
- JP 2002542360 W
- WO 2020004429 A
- JP 10237212 A